# EUROPEAN PATENT SPECIFICATION

(11) **EP 3 454 291 B1**
(45) Date of publication and mention of the grant of the patent: **19.08.2020**
(21) Application number: 18184651.0
(22) Date of filing: 20.07.2018
(51) Int. Cl.: G06Q 50/30, H04W 4/40, G06Q 10/02, G08G 1/00, G06Q 30/02, G06Q 30/06, G07C 5/00

(54) **VEHICLE ALLOCATION SYSTEM AND VEHICLE ALLOCATION CONTROL SERVER**
FAHRZEUGZUWEISUNGSSYSTEM UND FAHRZEUGZUWEISUNGSSTEUERUNGSSERVER
SYSTÈME D'ATTRIBUTION DE VÉHICULE ET SERVEUR DE COMMANDE D'ATTRIBUTION DE VÉHICULE

(30) Priority: 12.09.2017 JP 2017174983
(43) Date of publication of application: 13.03.2019
(73) Proprietor: TOYOTA JIDOSHA KABUSHIKI KAISHA, Toyota-shi, Aichi 471 8571 (JP)
(72) Inventor: WASEKURA, Masaki, Toyota-shi,, Aichi 471-8571 (JP)
(74) Representative: TBK

(56) References cited:
- US-A1- 2014 180 773
- US-A1- 2017 141 873
- US-A1- 2017 147 959
- US-A1- 2017 200 321
- US-A1- 2017 210 352
- US-B1- 9 817 400

## Description

### BACKGROUND OF THE INVENTION

### 1. Field of the Invention

The invention relates to a vehicle allocation system and a vehicle allocation control server.

### 2. Description of Related Art

The document US 9 547 307 B1 discloses a vehicle allocation system in which an autonomous vehicle, a mobile terminal of a user, and a server are connected to each other via a network. When a vehicle allocation request has been issued by the user, the server allocates, for example, a vehicle which can arrive earliest at a boarding place designated by the user.

However, when the interior or the exterior of the vehicle that has arrived is dirty or damaged, the user may feel unpleasant. Even after the vehicle has started traveling, the user may feel discomfort in riding quality, feel displeasure due to a smell inside the vehicle, or have dissatisfaction about the air-conditioning effect.

The document US 2017/210352 A1 discloses methods and systems for promoting cleanliness (or automatically maintaining cleanliness) of a vehicle. A thus disclosed method includes: receiving, by a processor, at least one sensor signal from a sensor that monitors for particulates within an interior of a vehicle; determining, by the processor, a level of uncleanliness of the vehicle based on the sensor signal; and selectively generating, by the processor, at least one of a control signal to a cleaning element of the vehicle and a notification message based on the determining to achieve the level of cleanliness.

Further related art is known from
the document US 2017/147959 A1 relating to controlling autonomous vehicles in connection with transport services,
the document US 2017/141873 A1 relating to system, apparatus and method for generating and transmitting an interruption signal to a substantially autonomous vehicle,
the document US 2014/180773 A1 relating to systems and methods for generating and validating incentives based on multi-person vehicle occupancy, and
the document US 2017/200321 A1 relating to reputation systems in ride share platforms.

### SUMMARY OF THE INVENTION

The invention provides a vehicle allocation system and a vehicle allocation control server that can relieve dissatisfaction when a user has dissatisfaction about an allocated vehicle. According to the invention, there are provided a vehicle allocation system and a vehicle allocation control server, as defined in the claims.

According to a first aspect of the present disclosure, there is provided a vehicle allocation system including: an autonomous vehicle; a mobile terminal; and a control center configured to communicate with the autonomous vehicle and the mobile terminal via a network, wherein the control center includes a vehicle allocation control unit configured to receive a vehicle allocation request from the mobile terminal and to allocate the autonomous vehicle to a position which is designated in the vehicle allocation request, and a vehicle reallocation control unit configured to allocate another autonomous vehicle when a vehicle replacement request has been received from the mobile terminal after the allocation has been completed. According to this aspect, when the allocated vehicle is not satisfactory to the user, another vehicle is allocated to the place in which the user is located by transmitting a vehicle replacement request from the mobile terminal to the control center. Accordingly, it is possible to relieve dissatisfaction of a user.

In the aspect, the mobile terminal may be configured to transmit the vehicle replacement request after an authentication process between the allocated autonomous vehicle and the mobile terminal has been completed. According to this aspect, by setting the time at which the user can request replacement of the vehicle to a time after the authentication process has been completed, it is possible to ensure that the vehicle replacement request is issued after the user has definitely checked the allocated vehicle.

In the aspect, the mobile terminal may be configured to transmit the vehicle replacement request until the autonomous vehicle arrives at a desired deboarding position set in the autonomous vehicle after boarding. According to this aspect, even when the user has dissatisfaction about riding quality of the vehicle, the smell inside the vehicle, or the like, it is possible to relieve the dissatisfaction through replacement of the vehicle on the way to a destination by setting the time at which the user can request replacement of the vehicle to a time until the vehicle arrives at a desired deboarding position, thereby not eliciting patience in the user.

In the aspect, the mobile terminal may be configured to add a reason why the mobile terminal has requested replacement of the vehicle to the vehicle replacement request. According to this aspect, the control center side can ascertain why the user has requested replacement of the vehicle.

In the aspect, the mobile terminal may be configured to add an evidence image captured by a camera of the mobile terminal to the vehicle replacement request. According to this aspect, the control center side can determine whether the reason for which the user has requested replacement of the vehicle is proper based on the evidence image captured by the camera of the mobile terminal.

In the aspect, the vehicle reallocation control unit may be configured to return the allocated autonomous vehicle to a base station when the vehicle replacement request has been received. According to this aspect, it is possible to prevent replacement of the vehicle from being repeated by returning the vehicle of which replacement has been requested by the user to the vehicle base for the purpose of inspection.

In the aspect, the mobile terminal may be configured to transmit an assessment of a state of the allocated autonomous vehicle to the control center, and the vehicle reallocation control unit may be configured to perform a process of reducing a usage fee of the autonomous vehicle which is paid by the user when a negative assessment of the state of the autonomous vehicle has been received from the mobile terminal. According to this aspect, a monetary profit corresponding to patience is provided to a user who has selected usage of the vehicle with patience in spite of the bad state of the vehicle, and a provider who provides the vehicle allocation service benefits because a decrease in operation rate accompanying replacement of the vehicle can be curbed.

In the aspect, the control center may further include: a database configured to store an assessment value of each user; and a user assessing unit configured to increase or decrease the assessment value depending on a usage state of the autonomous vehicle for each user and to determine a usage fee for each user depending on the assessment value. According to this aspect, since a history of a usage state of a vehicle for each user is reflected in a usage fee using an assessment value correlated with the corresponding user, it is possible to encourage each user to properly and respectfully use a vehicle.

In the aspect, the user assessing unit may be configured to decrease the assessment value of a previous user when a reason why the vehicle replacement request is transmitted from the mobile terminal is a complaint about a usage state of the autonomous vehicle. According to this aspect, by causing users to assess each other and decreasing an assessment value of a user for whom a usage state is assessed to be bad, it is possible to encourage the users to properly and respectfully use a vehicle.

In the aspect, the mobile terminal may be configured to transmit an assessment of the state of the allocated autonomous vehicle to the control center, and the user assessing unit may be configured to increase the assessment value of a previous user when a positive assessment indicating that the usage state of the autonomous vehicle is good has been received from the mobile terminal. According to this aspect, by causing users to assess each other and increasing an assessment value of a user for whom a usage state is assessed to be good, it is possible to encourage the users to continue to properly and respectfully use a vehicle.

In the aspect, the mobile terminal may be configured to transmit a cancellation request for cancelling the vehicle allocation request to the control center, and the vehicle reallocation control unit may be configured to cancel the allocation of the autonomous vehicle when the cancellation request has been received from the mobile terminal. According to this aspect, by accepting cancellation of a vehicle allocation request from a user who does not intend to use a vehicle anymore, it is possible to increase a satisfaction level of a user for a vehicle allocation service.

According to a second aspect of the present disclosure, there is provided a vehicle allocation control server configured to constitute a vehicle allocation system along with an autonomous vehicle and a mobile terminal and to communicate with the autonomous vehicle and the mobile terminal via a network. The vehicle allocation control server according to the second aspect includes: at least one processor; and at least one memory in which at least one program is stored, wherein the program is programmed to cause the processor to perform receiving a vehicle allocation request from the mobile terminal, allocating the autonomous vehicle to a position which is designated in the vehicle allocation request, and allocating another autonomous vehicle when a vehicle replacement request has been received from the mobile terminal after the allocation has been completed. According to this aspect, when the allocated vehicle is not satisfactory to the user, another vehicle is allocated to the place in which the user is located by transmitting a vehicle replacement request from the mobile terminal to the vehicle allocation control center. Accordingly, it is possible to relieve dissatisfaction of a user.

As described above, with the vehicle allocation system and the vehicle allocation control server according to the present disclosure, when a user has dissatisfaction about an allocated autonomous vehicle and a vehicle replacement request from a mobile terminal carried by the user has been received by the control center (the vehicle allocation control server), another autonomous vehicle is allocated to a place in which the user is located and thus dissatisfaction of the user is relieved.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram illustrating a configuration of a vehicle allocation system according to an embodiment of the invention;
FIG. 2 is a flowchart illustrating an example of a flow of a vehicle allocation service which is provided by a vehicle allocation system according to a first embodiment;
FIGS. 3A and 3B are flowcharts illustrating an example of a process flow which is performed by the vehicle allocation system according to the first embodiment;
FIG. 4 is a flowchart illustrating another example of a flow of the vehicle allocation service which is provided by the vehicle allocation system according to the first embodiment;
FIGS. 5A and 5B are flowcharts illustrating another example of the process flow which is performed by the vehicle allocation system according to the first embodiment;
FIG. 6 is a flowchart illustrating an example of a flow of a vehicle allocation service which is provided by a vehicle allocation system according to a second embodiment;
FIG. 7 is a flowchart illustrating an example of a flow of a vehicle allocation service which is provided by a vehicle allocation system according to a third embodiment;
FIG. 8 is a flowchart illustrating an example of a flow of a vehicle allocation service which is provided by a vehicle allocation system according to a fourth embodiment; and
FIG. 9 is a flowchart illustrating an example of a flow of a vehicle allocation service which is provided by a vehicle allocation system according to a modified example of the first embodiment.

### DETAILED DESCRIPTION OF EMBODIMENTS

Hereinafter, embodiments of the invention will be described with reference to the accompanying drawings. When numerals such as the number of elements, amounts, volumes, and ranges are mentioned in the following embodiments, the invention is not limited to the mentioned numerals unless such numerals are particularly explicitly mentioned or such numerals are specified clearly in principle. Structures, steps, or the like which are described in the following embodiments are not essential to the invention unless such structures, steps, or the like are particularly explicitly mentioned or such structures, steps, or the like are specified clearly in principle.

### First embodiment

### 1-1. Configuration of vehicle allocation system

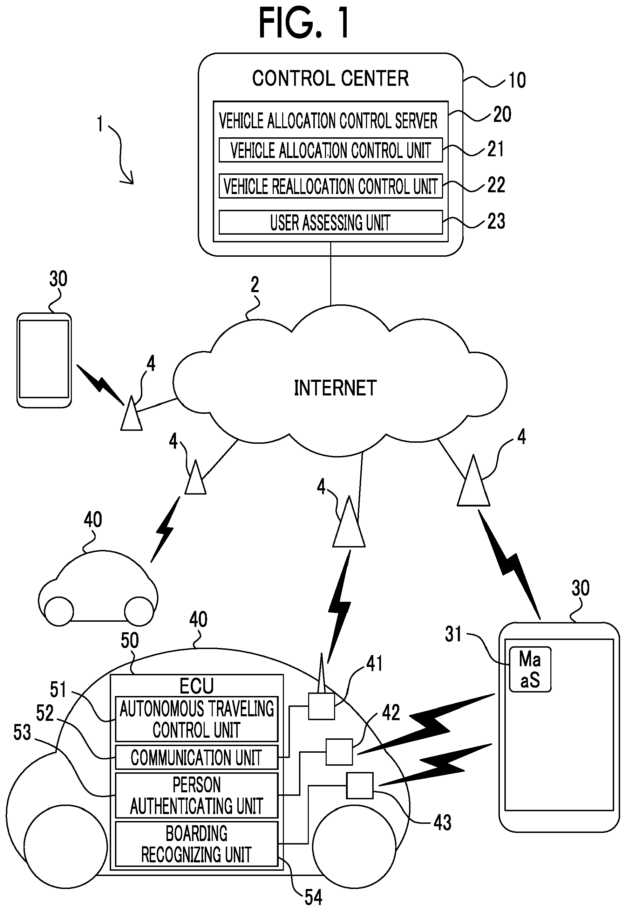

A vehicle allocation system is a system for realizing a vehicle allocation service of allocating an autonomous vehicle which can operate without a driver in response to a request from a user. FIG. 1 is a diagram illustrating a configuration of a vehicle allocation system 1 according to an embodiment of the invention. The configuration of the vehicle allocation system 1 will be described below with reference to FIG. 1. The configuration of the vehicle allocation system 1 which will be described below is common to second, third, and fourth embodiments which will be described later as well as the first embodiment.

The vehicle allocation system 1 includes an autonomous vehicle 40, a mobile terminal 30 which is carried by a user of the vehicle allocation system 1, and a control center 10 that communicates with the autonomous vehicle 40 and the mobile terminal 30 via a network (that is, the Internet) 2. The number of autonomous vehicles 40 constituting the vehicle allocation system 1 is at least two. More specifically, at least two autonomous vehicles 40 in an available state belong to the vehicle allocation system 1.

The control center 10 is an establishment which is run by a provider who provides a vehicle allocation service. Here, at least a vehicle allocation control server 20 has only to be provided regardless of whether it is unmanned/manned. Alternatively, the vehicle allocation control server 20 itself may serve as the control center 10. The vehicle allocation control server 20 is a computer including at least one processor and at least one memory. At least one program and a variety of data for the vehicle allocation service are stored in the memory. By causing the processor to read and execute the program stored in the memory, various functions indicated by blocks in FIG. 1 are realized in the vehicle allocation control server 20. The vehicle allocation control server 20 also includes a storage device with a large capacity such as an HDD or an SSD. A database for registering information on users using the vehicle allocation service is constructed in the storage device. The vehicle allocation control server 20 may include a plurality of computers.

The vehicle allocation control server 20 is connected to the network 2. The vehicle allocation control server 20 is configured to communicate with the autonomous vehicle 40 via the network 2. The vehicle allocation control server 20 is configured to communicate with the mobile terminals 30 of users via the network 2. In FIG. 1, functions for the vehicle allocation service of the vehicle allocation control server 20 are illustrated in a plurality of blocks. The blocks correspond to a vehicle allocation control unit 21, a vehicle reallocation control unit 22, and a user assessing unit 23.

The vehicle allocation control unit 21 is configured to perform a reception process of receiving a vehicle allocation request which is transmitted from a mobile terminal 30 of a user via the network 2 and a vehicle allocation process of allocating an autonomous vehicle 40 to a position designated in the vehicle allocation request. The vehicle allocation request which is received in the reception process includes a desired allocation position at which the user desires that the autonomous vehicle 40 be allocated and ID information for identifying the user, specifically, ID information (for example, a PIN code) which is registered in the mobile terminal 30. The desired allocation position may be a current position of the mobile terminal 30 which is specified from GPS position information of the mobile terminal 30. In the vehicle allocation process, the vehicle allocation control unit 21 selects an optimal vehicle, for example, a vehicle which can arrive at the desired allocation position earliest, among a plurality of autonomous vehicles 40, transmits the desired allocation position and ID information of the user to the vehicle, and instructs the vehicle to pick up the user.

The vehicle reallocation control unit 22 is configured to perform a reception process of receiving a vehicle replacement request transmitted from a mobile terminal 30 of a user via the network 2 and a vehicle reallocation process of allocating another autonomous vehicle 40 to the user having requested replacement of a vehicle. The vehicle replacement request received in the reception process includes at least ID information for identifying a user. The ID information of a user is correlated with ID information of the autonomous vehicle 40 which is currently allocated. In the vehicle reallocation process, the autonomous vehicle 40 which is currently allocated is identified from the ID information of a user and a current position of the autonomous vehicle 40 which is currently allocated is acquired as a desired allocation position of the user. Here, a current position of the mobile terminal 30 which is identified from the GPS position information of the mobile terminal 30 may be acquired as the desired allocation position. The vehicle reallocation control unit 22 selects an optimal vehicle, for example, a vehicle which can arrive at the current position of the user earliest, among the vehicles other than the autonomous vehicle 40 which is currently allocated, transmits the desired allocation position and the ID information of the user to the vehicle, and instructs the vehicle to pick up the user.

The user assessing unit 23 is configured to register an assessment value correlated with each user in the database in correlation with ID information thereof. An assessment value is a variable that varies depending on a way in which the user uses the vehicle allocation service. For example, an assessment value may be a variable which decreases when the user uses an autonomous vehicle 40 roughly and increases when the user uses an autonomous vehicle 40 respectfully. An assessment value may be a variable which increases depending on the number of times the user uses the vehicle allocation service or the distance for which the user uses the vehicle allocation service. An assessment value may be a variable which decreases depending on the number of times the user cancels usage of the vehicle allocation service immediately before allocation. An assessment value may be referred to for calculating a usage fee. For example, a rate which is used to calculate a usage fee may be changed depending on the assessment value, or an extra fee or a discounted fee may be determined depending on the assessment value so that the usage fee increases relatively as the assessment value decreases and the usage fee decreases relatively as the assessment value increases. An assessment value may be collected as points which can be replaced with cash, a gift, or the like.

The mobile terminal 30 is a wireless communication terminal that can wirelessly communicate with a base station 4 of the network 2, for example, a smartphone. A communication standard of the wireless communication which is used by the mobile terminal 30 is a mobile communication standard such as 4G, LTE, or 5G. An application 31 for using the vehicle allocation service is installed in the mobile terminal 30. By starting the application 31, the mobile terminal 30 can access the control center 10 via the network 2 and request the control center 10 to allocate an autonomous vehicle 40.

The mobile terminal 30 preferably includes a chip of short-range radio communication (not illustrated) such as WiFi or Bluetooth (registered trademark) and a chip of near-field radio communication (not illustrated) such as Felica (registered trademark) or NFC. The short-range radio communication is used for personal authentication between a mobile terminal 30 and an autonomous vehicle 40. When another means is used for personal authentication, the function of short-range radio communication may not be provided. The near-field radio communication is used for boarding confirmation between a mobile terminal 30 and an autonomous vehicle 40. When another means is used for boarding confirmation, the function of near-field radio communication may not be provided.

An autonomous vehicle 40 is a vehicle that can travel autonomously on a route from a current location to a destination based on a variety of information. The variety of information for autonomous traveling includes external condition recognition information for recognizing external conditions of a host vehicle which is acquired by an external sensor such as a camera sensor or a millimeter radio wave sensor which is not illustrated. The variety of information for autonomous traveling includes vehicle state recognition information for recognizing a state of a host vehicle which is acquired by an internal sensor such as a vehicle speed sensor or an acceleration sensor which is not illustrated. The variety of information for autonomous traveling includes position information indicating a position of a host vehicle acquired by a GPS receiver which is not illustrated and map information stored in a map database.

An autonomous vehicle 40 includes a control device 50, a network communication device 41, an authentication communication device 42, and a boarding-confirmation communication device 43. The control device 50 is an electronic control unit (ECU) including at least one processor and at least one memory. At least one program and various data for automatic driving are stored in the memory. By causing the processor to read and execute the program stored in the memory, the control device 50 embodies various functions indicated by blocks in FIG. 1. The control device 50 may include a plurality of ECUs.

In FIG. 1, particularly, functions associated with the vehicle allocation service among the functions for autonomous traveling of the control device 50 are illustrated in a plurality of blocks. The blocks corresponds to an autonomous traveling control unit 51, a communication unit 52, a personal authentication unit 53, and a boarding confirmation unit 54. Autonomous traveling based on the above-mentioned various information is realized by the autonomous traveling control unit 51. The autonomous traveling control unit 51 calculates a traveling route on which the host vehicle travels based on the position information of the host vehicle and the map information, and controls driving, steering, and braking of the host vehicle such that the host vehicle travels along the calculated traveling route. Since various known methods can be used as an autonomous traveling method and the autonomous traveling method itself is not particularly limited in the invention, detailed description thereof will not be made. Autonomous traveling to a desired allocation position designated by a user, a boarding process of allowing the user to board the vehicle at the desired allocation position, autonomous traveling to a desired deboarding position designated by the user, and an deboarding process of allowing the user to alight from the vehicle at the desired deboarding position are all performed by the autonomous traveling control unit 51.

The communication unit 52 is configured to be connected to the network 2 using the network communication device 41. Specifically, radio communication is carried out between the network communication device 41 and a nearest base station 4, and the communication unit 52 is connected to the network 2 via the base station 4. The communication standard of the radio communication which is used by the network communication device 41 may be a mobile communication standard such as 4G, LTE, or 5G. A connection destination of the communication unit 52 over the network 2 is the vehicle allocation control server 20 disposed in the control center 10. For example, vehicle state recognition information acquired by the internal sensor or external condition recognition information acquired by the external sensor is transmitted from the communication unit 52 to the vehicle allocation control server 20. For example, ID information of a user for identifying the user desiring allocation of a vehicle or vehicle allocation instruction information such as a desired allocation position or a desired deboarding position is transmitted from the vehicle allocation control server 20 to the communication unit 52.

The personal authentication unit 53 is configured to wirelessly communicate with a mobile terminal 30 using the authentication communication device 42. The communication standard which is used by the authentication communication device 42 can be a standard for short-range radio communication such as WiFi or Bluetooth (registered trademark). The personal authentication unit 53 performs short-range radio communication with the mobile terminal 30 located near the autonomous vehicle 40 and directly acquires ID information (for example, a PIN code) registered in the mobile terminal 30. The personal authentication unit 53 compares the ID information directly acquired from the mobile terminal 30 by short-range radio communication with the ID information of the user acquired from the vehicle allocation control server 20. When both match each other, the personal authentication unit 53 authenticates the user of the mobile terminal 30 as a person having requested allocation of a vehicle. The personal authentication performed by the personal authentication unit 53 is used, for example, as a condition for unlocking a door after the autonomous vehicle 40 stops at the desired allocation position designated by the user. The personal authentication is also used as a condition for transmission of a vehicle replacement request.

The boarding confirmation unit 54 is configured to perform radio communication with the mobile terminal 30 using the boarding-confirmation communication device 43. The communication standard which is used by the boarding-confirmation communication device 43 can be a standard for near-field radio communication such as Felica (registered trademark) or NFC. The boarding-confirmation communication device 43 is provided inside the autonomous vehicle 40. By allowing the user to board the autonomous vehicle 40 and to bring the mobile terminal 30 into contact with the boarding-confirmation communication device 43, communication is carried out between the mobile terminal 30 and the boarding-confirmation communication device 43. The boarding confirmation unit 54 directly acquires ID information (for example, a PIN code) registered in the mobile terminal 30 by near-field radio communication. Then, the boarding confirmation unit 54 compares the ID Information directly acquired from the mobile terminal 30 by near-field radio communication with the ID information of the user acquired from the vehicle allocation control server 20. When both match each other, the boarding confirmation unit 54 determines that the user is in the autonomous vehicle 40. The boarding confirmation by the boarding confirmation unit 54 is used, for example, as a condition for causing the autonomous vehicle 40 to start traveling.

### 1-2. Example 1 of flow of vehicle allocation service

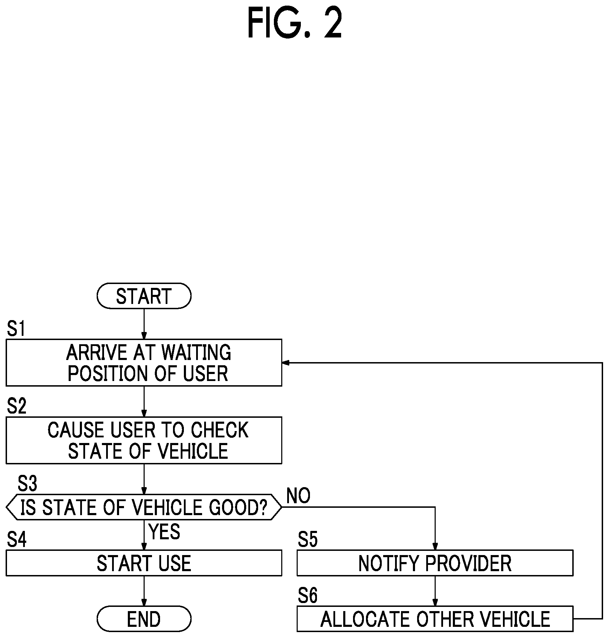

The vehicle allocation service which is provided by the vehicle allocation system 1 having the above-mentioned configuration will be described below with reference to FIG. 2. FIG. 2 is a flowchart illustrating an example of a flow of the vehicle allocation service which is provided by the vehicle allocation system 1 according to the first embodiment.

The flow of the vehicle allocation service illustrated in the flowchart is a flow after a user has operated a mobile terminal 30 to request allocation of a vehicle. Sometime after the allocation of a vehicle has been requested, an autonomous vehicle 40 arrives at a waiting position of the user (Step S1). The user may immediately board the arrived autonomous vehicle 40, but first checks a state of the arrived autonomous vehicle 40 (Step S2). Then, the user determines whether the state of the arrived autonomous vehicle 40 is good (Step S3). The inside or appearance of a vehicle may be dirty or damaged depending on the vehicle. Boarding such a vehicle gives displeasure to many users.

When it is determined that the state of the arrived autonomous vehicle 40 is good, the user starts usage of the autonomous vehicle 40 (Step S4).

On the other hand, when it is determined that the state of the arrived autonomous vehicle 40 is not good, the user notifies a provider of information indicating such a determination result (Step S5). The provider having been notified allocates another autonomous vehicle 40 to the place in which the user is located (Step S6).

Sometime after the provider has been notified, another autonomous vehicle 40 arrives at the waiting position of the user (Step S1). The user checks a state of the arrived autonomous vehicle 40 (Step S2). The user determines again whether the state of the arrived autonomous vehicle 40 is good (Step S3). When it is determined that the state of the arrived autonomous vehicle 40 is good, the user starts usage of the autonomous vehicle 40 (Step S4).

With the vehicle allocation service which is provided in this flow, since a user may not board the autonomous vehicle 40 which is not satisfactory to the user with patience, dissatisfaction of the user about the allocated autonomous vehicle 40 is relieved. This provides a merit to the user and also provides a merit to the provider providing the vehicle allocation service in that reliability of the user is not damaged.

### 1-3. Example 1 of process flow in vehicle allocation system

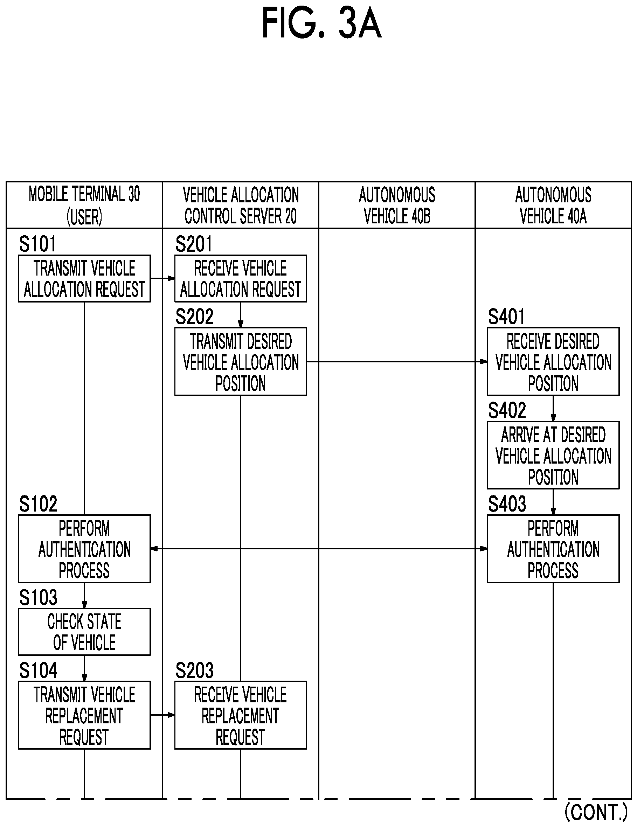

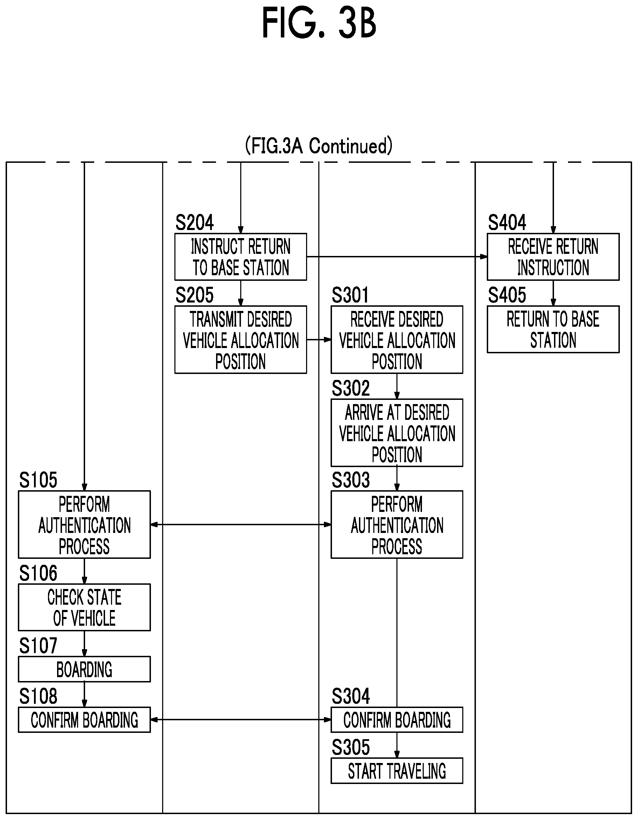

FIGS. 3A and 3B are flowcharts illustrating an example of a process flow in the vehicle allocation system 1 according to the first embodiment. The example of the flow of the vehicle allocation service illustrated in FIG. 2 is realized by causing the vehicle allocation system to perform the process flow illustrated in FIGS. 3A and 3B. In FIGS. 3A and 3B, processes in a mobile terminal 30 (user), the vehicle allocation control server 20, and autonomous vehicles 40A and 40B which constitute the vehicle allocation system are illustrated in a time series. The autonomous vehicle 40A and the autonomous vehicle 40B are two of a plurality of autonomous vehicles 40 constituting the vehicle allocation system.

When the user operates the mobile terminal 30 to transmit a vehicle allocation request (Step S101), the vehicle allocation control server 20 installed in the control center 10 receives the vehicle allocation request (Step S201). The vehicle allocation control server 20 selects an optimal autonomous vehicle 40A based on a desired allocation position designated in the vehicle allocation request and transmits the desired allocation position to the autonomous vehicle 40A (Step S202). At this time, ID information of the user included in the vehicle allocation request is also transmitted to the autonomous vehicle 40A along with the desired allocation position.

When the desired allocation position transmitted from the vehicle allocation control server 20 is received (Step S401), the autonomous vehicle 40A travels autonomously to the desired allocation position. When the autonomous vehicle 40A arrives at the desired allocation position (Step S402), an authentication process for personal authentication is performed between the autonomous vehicle 40A and the mobile terminal 30 of the user (Step S102 and Step S403).

The user checks a state of the arrived autonomous vehicle 40A (Step S103). When the user rejects boarding the autonomous vehicle 40A for a certain reason such as a state in which the inside of the vehicle is too dirty to board the vehicle, the user operates the mobile terminal 30 to transmit a vehicle replacement request (Step S104). By setting a time at which the user can request replacement of the autonomous vehicle 40A to a time point after the authentication process has been completed, it is ensured that the vehicle replacement request is transmitted after the user has definitely checked the state of the allocated autonomous vehicle 40A.

The vehicle replacement request transmitted from the mobile terminal 30 may include a reason why the user has requested replacement of a vehicle. Accordingly, the control center 10 side can understand the reason why the user has requested replacement of the vehicle. The reason may be freely described or may be selected from predetermined options. The vehicle replacement request transmitted from the mobile terminal 30 may include an evidence image captured by a camera of the mobile terminal 30. Accordingly, the control center 10 side can determine whether the reason why the user has requested replacement of the vehicle is proper based on the evidence image captured by the camera of the mobile terminal 30.

When the vehicle replacement request transmitted from the mobile terminal 30 is received (Step S203), the vehicle allocation control server 20 instructs the autonomous vehicle 40A to return to a vehicle base (Step S204). The vehicle allocation control server 20 selects another autonomous vehicle 40B based on the desired allocation position designated already by the user and transmits the desired allocation position to the autonomous vehicle 40B (Step S205). At this time, ID information of the user is also transmitted to the autonomous vehicle 40B along with the desired allocation position.

When a return instruction transmitted from the vehicle allocation control server 20 is received (Step S404), the autonomous vehicle 40A returns to the vehicle base by autonomous traveling (Step S405). In the vehicle base, the autonomous vehicle 40A is inspected. The autonomous vehicle 40A may not be returned to the vehicle base but may be allocated to another user. However, by returning a vehicle of which replacement has been requested by a user to the vehicle base for inspection, there are merits that it is possible to prevent repetition of replacement and to prevent a more significant problem from occurring.

When the desired allocation position transmitted from the vehicle allocation control server 20 is received (Step S301), the autonomous vehicle 40B travels autonomously to the desired allocation position. When the autonomous vehicle 40B arrives at the desired allocation position (Step S302), an authentication process for personal authentication is performed between the autonomous vehicle 40B and the mobile terminal 30 of the user (Step S105 and Step S303).

The user checks a state of the arrived autonomous vehicle 40B (Step S106). When there is no problem in the state of the autonomous vehicle 40B, or when there is a little problem in the state of the autonomous vehicle but the problem is in an allowable range for the user, the user boards the autonomous vehicle 40B (Step S107).

When boarding confirmation is carried out between the autonomous vehicle 40B and the mobile terminal 30 of the user (Step S108 and Step S304), the autonomous vehicle 40B starts traveling (Step S305). The conditions for allowing the autonomous vehicle 40B to start traveling includes a condition that at least boarding confirmation has been performed and a condition that a desired deboarding position has been designated. The desired deboarding position may be designated along with the desired allocation position at the time of transmission of the vehicle allocation request or may be designated after the user has boarded the autonomous vehicle 40B.

### 1-4. Example 2 of flow of vehicle allocation service

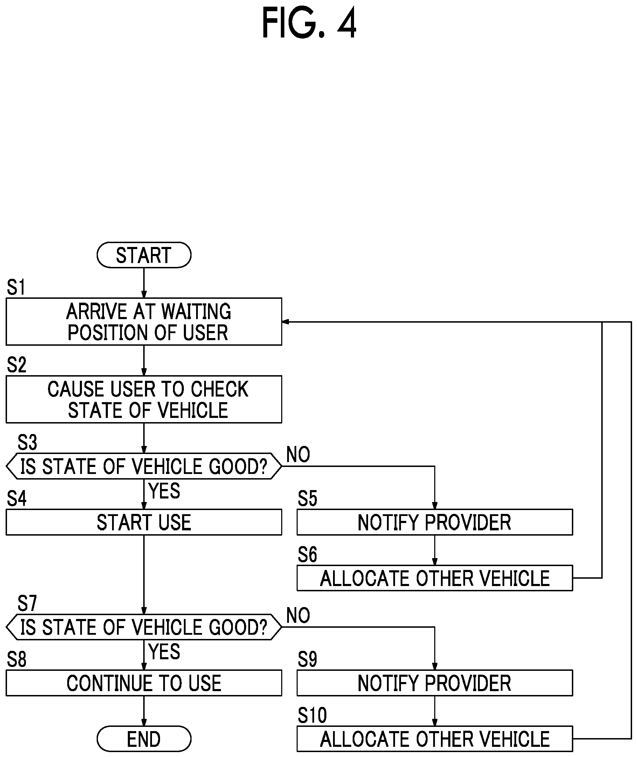

FIG. 4 is a flowchart illustrating another example of a flow of the vehicle allocation service which is provided by the vehicle allocation system 1 according to the first embodiment. In the flowchart, operations or processes having the same details as in the example of the flow of the vehicle allocation service illustrated in FIG. 2 are referred to by the same step numbers.

With the flow of the vehicle allocation service illustrated in the flowchart, a user determines whether a state of an autonomous vehicle 40 boarded by the user is good (Step S7) after the user has started usage of the autonomous vehicle 40 (Step S4). Even if there is no problem in dirtiness or damage of the inside or appearance of the vehicle, the user may feel discomfort in riding quality while boarding the vehicle, may feel an unpleasant smell inside the vehicle, or may have dissatisfaction about the air-conditioning effect. Boarding such a vehicle gives displeasure to many users.

When it is determined that the state of the arrived autonomous vehicle 40 boarded by the user is good, the user continues to use the autonomous vehicle 40 (Step S8).

On the other hand, when it is determined that the state of the arrived autonomous vehicle 40 boarded by the user is not good, the user notifies a provider of information indicating such a determination result (Step S9). The provider having been notified allocates another autonomous vehicle 40 to the place in which the user is located (Step S10).

Sometime after the provider has been notified, another autonomous vehicle 40 arrives at a waiting position of the user (a position at which the user alights from the original autonomous vehicle 40) (Step S1). The user checks a state of the arrived autonomous vehicle 40 (Step S2). The user determines again whether the state of the arrived autonomous vehicle 40 is good (Step S3). When it is determined that the state of the arrived autonomous vehicle 40 is good, the user starts usage of the autonomous vehicle 40 (Step S4). After starting the usage, the user determines again whether the state of the autonomous vehicle 40 boarded by the user is good (Step S7). When it is determined that the state of the autonomous vehicle is good, the user continues to use the autonomous vehicle 40 (Step S8).

With the vehicle allocation service which is provided in this flow, the user can request replacement of the vehicle to the control center 10 until the autonomous vehicle 40 arrives at a desired deboarding position. Accordingly, even if the user has dissatisfaction about riding quality, the smell inside the vehicle, or the like, it is possible to relieve the dissatisfaction by replacement of the vehicle on the way to a destination and patience is not impelled to the user. This provides a merit to the user and also provides a merit to the provider providing the vehicle allocation service in that reliability of the user is not damaged.

### 1-5. Example 2 of process flow in vehicle allocation system

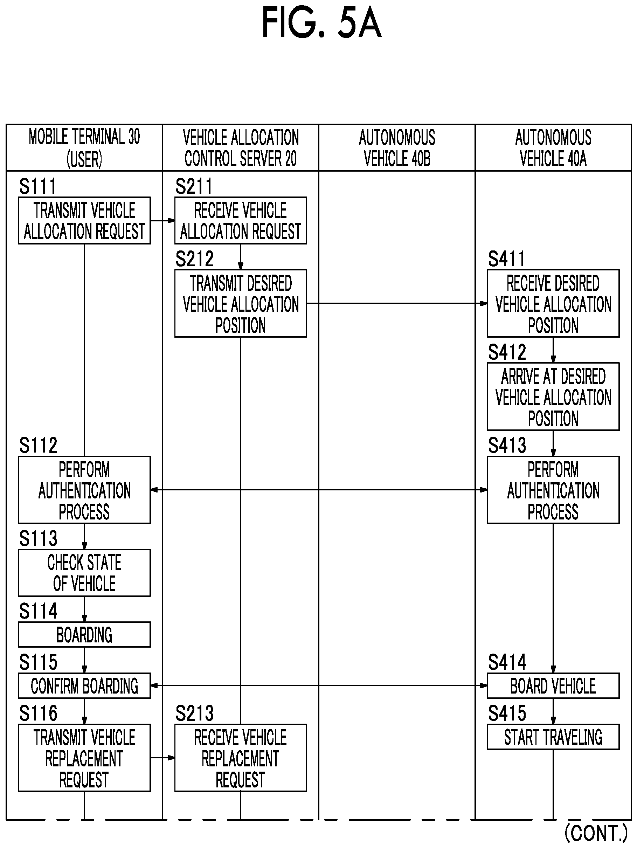

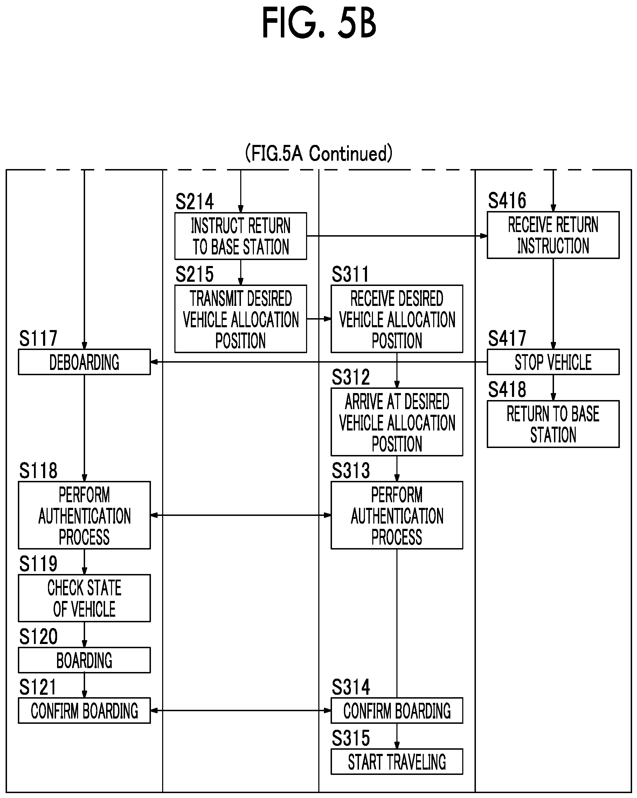

FIGS. 5A and 5B are flowcharts illustrating another example of a process flow in the vehicle allocation system 1 according to the first embodiment. The example of the flow of the vehicle allocation service illustrated in FIG. 4 is realized by causing the vehicle allocation system to perform the process flow illustrated in FIGS. 5A and 5B. The process flow illustrated in FIGS. 5A and 5B much overlaps the process flow illustrated in FIGS. 3A and 3B and thus the overlapping part will be described below in brief.

When the user operates the mobile terminal 30 to transmit a vehicle allocation request (Step S111), the vehicle allocation control server 20 installed in the control center 10 receives the vehicle allocation request (Step S211). The vehicle allocation control server 20 selects an optimal autonomous vehicle 40A based on a desired allocation position included in the vehicle allocation request and transmits the desired allocation position to the selected autonomous vehicle 40A along with ID information of the user (Step S212).

When the desired allocation position is received (Step S411), the autonomous vehicle 40A travels autonomously to the desired allocation position. When the autonomous vehicle 40A arrives at the desired allocation position (Step S412), an authentication process for personal authentication is performed between the autonomous vehicle 40A and the mobile terminal 30 of the user (Step S112 and Step S413).

The user checks a state of the arrived autonomous vehicle 40A (Step S113). When there is no problem in the state of the autonomous vehicle 40A, or when there is a little problem in the state of the autonomous vehicle but the problem is in an allowable range for the user, the user boards the autonomous vehicle 40A (Step S114).

When boarding confirmation is carried out between the autonomous vehicle 40A and the mobile terminal 30 of the user (Step S115 and Step S414), the autonomous vehicle 40A starts traveling (Step S415).

When there is a certain problem in the autonomous vehicle 40A boarded by the user such as when air emitted from an air conditioner smells unpleasant, the user operates the mobile terminal 30 to transmit a vehicle replacement request (Step S116).

When the vehicle replacement request is received (Step S213), the vehicle allocation control server 20 instructs the autonomous vehicle 40A to return to the vehicle base (Step S214). The vehicle allocation control server 20 selects another autonomous vehicle 40B with the current position of the autonomous vehicle 40A as a desired allocation position and transmits the desired allocation position along with ID information of the user to the autonomous vehicle 40B (Step S215).

When the return instruction is received (Step S416), the autonomous vehicle 40A stops immediately at a safe place (Step S417), and causes the user to alight from the autonomous vehicle 40A (Step S117). Then, the autonomous vehicle 40A returns to the vehicle base by autonomous traveling (Step S418).

When the desired allocation position is received (Step S311), the autonomous vehicle 40B travels autonomously to the desired allocation position. When the autonomous vehicle 40B arrives at the desired allocation position (Step S312), an authentication process for personal authentication is performed between the autonomous vehicle 40B and the mobile terminal 30 of the user (Step S118 and Step S313).

The user checks a state of the arrived autonomous vehicle 40B (Step S119). When there is no problem in the state of the autonomous vehicle 40B, or when there is a little problem in the state of the autonomous vehicle but the problem is in an allowable range for the user, the user boards the autonomous vehicle 40B (Step S120).

When boarding confirmation is carried out between the autonomous vehicle 40B and the mobile terminal 30 of the user (Step S121 and Step S314), the autonomous vehicle 40B starts traveling (Step S315).

### Second embodiment

A second embodiment is characterized in that a rate of a usage fee when a user uses a vehicle allocation service is set to vary depending on a state of an allocated autonomous vehicle 40. Specifically, in a vehicle allocation system according to the second embodiment, an assessment of a state of an allocated autonomous vehicle 40 can be transmitted from a mobile terminal 30 to the control center 10. The vehicle reallocation control unit 22 of the vehicle allocation control server 20 performs a process of reducing a usage fee in this time or in the future of the user when a negative assessment indicating that the state of the autonomous vehicle 40 is not good is received from the mobile terminal 30 of the user instead of a vehicle replacement request.

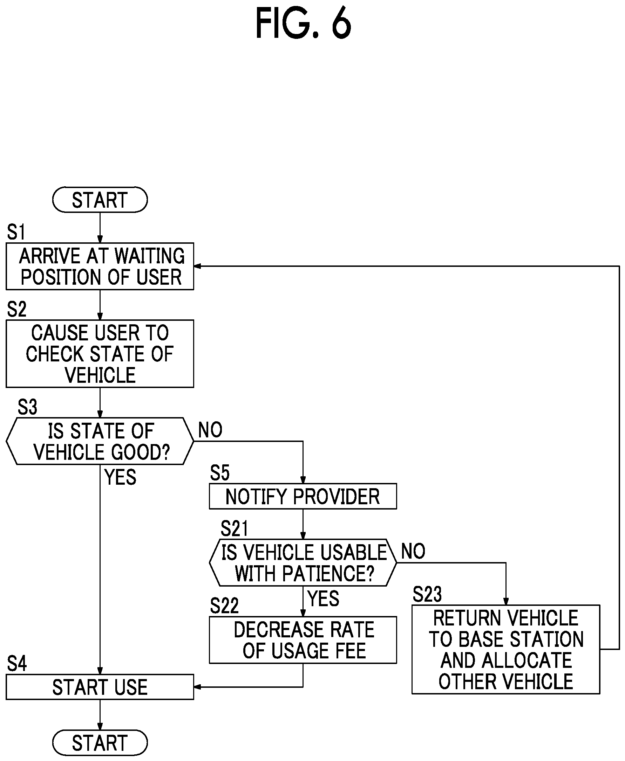

FIG. 6 is a flowchart illustrating an example of a flow of a vehicle allocation service which is provided by the vehicle allocation system according to the second embodiment. In the flowchart, operations or processes having the same details as in the flow of the vehicle allocation service illustrated in FIG. 2 are referred to by the same step numbers.

In the flow of the vehicle allocation service illustrated in the flowchart, when a user notifies a provider that the state of the arrived autonomous vehicle 40 is not good (Step S5), the provider reads whether the user determines that the user can use the allocated autonomous vehicle with patience from the notification details (Step S21). When the user can use the autonomous vehicle with patience, a negative assessment indicating that the state of the allocated autonomous vehicle 40 is not good is transmitted from the user to the provider. On the other hand, when the user cannot use the allocated autonomous vehicle with patience, a vehicle replacement request is transmitted from the user to the provider.

When the user determines that the user cannot use the allocated autonomous vehicle with patience, the provider returns the allocated autonomous vehicle 40 to the vehicle base and allocates another autonomous vehicle 40 to the place in which the user is located (Step S23). On the other hand, when the user determines that the user can use the allocated autonomous vehicle with patience, the provider decreases the rate of a usage fee for this vehicle allocation service (Step S22). Alternatively, the provider may issue a discount coupon which can be used in the next time to the user. This process is performed by the vehicle reallocation control unit 22 of the vehicle allocation control server 20.

When it is determined that the state of the allocated autonomous vehicle 40 is good or when it is determined that the allocated autonomous vehicle 40 can be used with patience, the user starts usage of the autonomous vehicle 40 (Step S4).

In the vehicle allocation service which is provided in this flow, a user having selected that the user uses the allocated autonomous vehicle 40 with patience in spite of the bad state of the autonomous vehicle 40 is provided with a monetary profit proper for the patience, and the provider that provides the vehicle allocation service benefits because a decrease in operation rate due to replacement of a vehicle can be curbed. The process flow when it has been determined whether a state of an autonomous vehicle 40 is good before boarding the autonomous vehicle 40 is described herein, but the same process flow can be performed when it has been determined whether the state of the autonomous vehicle 40 is good after boarding the autonomous vehicle 40.

### Third embodiment

A third embodiment is characterized in that an assessment value of a user registered in a database is increased or decreased by mutual assessment of users and a usage fee for each user is determined depending on the assessment values. Specifically, in a vehicle allocation system according to the third embodiment, the user assessing unit 23 performs a process of decreasing the assessment value of a previous user when the reason why a vehicle replacement request is transmitted from the mobile terminal 30 of a current user is dissatisfaction about a usage state of the autonomous vehicle 40. On the other hand, the user assessing unit 23 performs a process of increasing the assessment value of the previous user when a positive assessment indicating that the usage state of the autonomous vehicle 40 is good is received from the mobile terminal 30 of the current user.

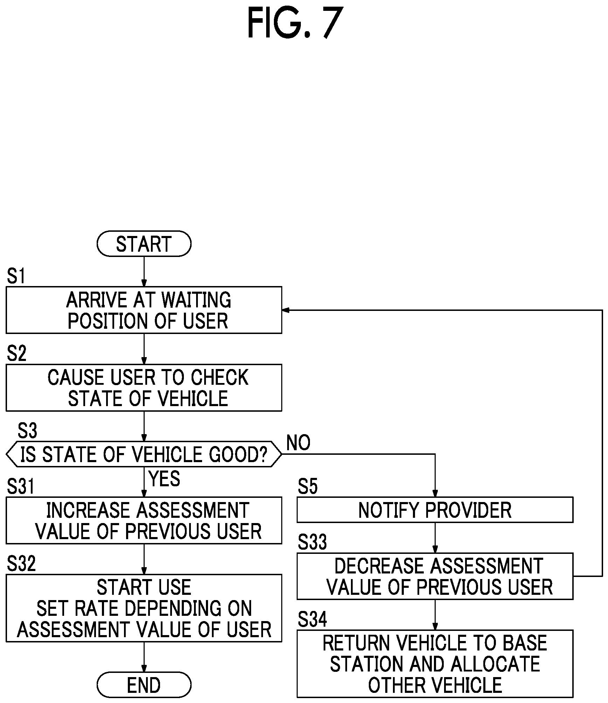

FIG. 7 is a flowchart illustrating an example of a flow of a vehicle allocation service which is provided by the vehicle allocation system according to the third embodiment. In the flowchart, operations or processes having the same details as in the flow of the vehicle allocation service illustrated in FIG. 2 are referred to by the same step numbers.

In the flow of the vehicle allocation service illustrated in the flowchart, when a user notifies a provider that the state of the arrived autonomous vehicle 40 is not good (Step S5), the provider decreases the assessment value of a previous user of the currently allocated autonomous vehicle 40 (Step S33). When a reason why the user has requested replacement of the vehicle is included in the vehicle replacement request, it is preferably determined whether to decrease the assessment value in consideration of the reason. When an evidence image captured by the camera of the mobile terminal 30 is included in the vehicle replacement request, it is preferably determined whether to decrease the assessment value in consideration of the evidence image. The provider returns the allocated autonomous vehicle 40 to the vehicle base and allocates another autonomous vehicle 40 to the place in which the user is located (Step S34).

On the other hand, when the user determines that the state of the arrived autonomous vehicle 40 is good, the provider increases the assessment value of the previous user of the currently allocated autonomous vehicle 40 (Step S31). In this case, the user starts usage of the allocated autonomous vehicle 40. The rate of the usage fee for use of the current vehicle allocation service is calculated depending on the assessment value registered for each user in the database (Step S32).

In the vehicle allocation service which is provided in this flow, since a history of a usage state of an autonomous vehicle 40 for each user is reflected in the usage fee using the assessment value correlated with each user, it is possible to encourage each user to properly and respectfully use a vehicle. More specifically, it is possible to encourage each user to properly and respectfully use a vehicle by causing users to assess each other and decreasing an assessment value of a user for which the usage state is not good, and it is possible to encourage each user to continue to properly and respectfully use a vehicle by increasing an assessment value of a user for which the usage state is good. The process flow when it has been determined whether a state of an autonomous vehicle 40 is good before boarding the autonomous vehicle 40 is described herein, but the same process flow can be performed when it has been determined whether the state of the autonomous vehicle 40 is good after boarding the autonomous vehicle 40.

### Fourth embodiment

A fourth embodiment is characterized in that cancel of a vehicle allocation request from a user who does not intend to use an autonomous vehicle 40 anymore is accepted. Specifically, in a vehicle allocation system according to the fourth embodiment, a cancellation request for cancelling a vehicle allocation request can be transmitted from a mobile terminal 30 to the control center 10. The vehicle reallocation control unit 22 of the vehicle allocation control server 20 performs a process of cancelling allocation of an autonomous vehicle 40 to a user when a cancellation request has been received from a mobile terminal 30 of the user instead of a vehicle replacement request.

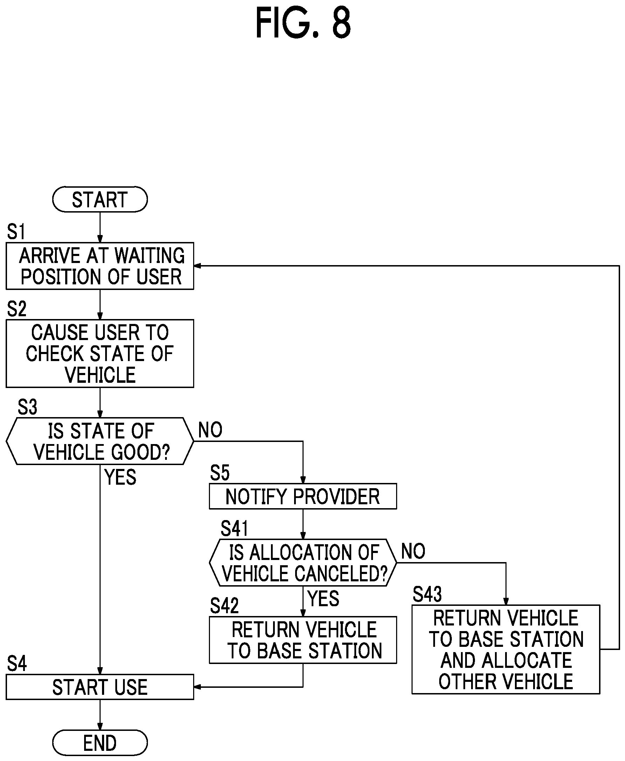

FIG. 8 is a flowchart illustrating an example of a flow of a vehicle allocation service which is provided by the vehicle allocation system according to the fourth embodiment. In the flowchart, operations or processes having the same details as in the flow of the vehicle allocation service illustrated in FIG. 2 are referred to by the same step numbers.

In the flow of the vehicle allocation service illustrated in the flowchart, when a provider has been notified by a user (Step S5), the provider determines whether the notification is a vehicle replacement request or a cancellation request (Step S41). When a vehicle replacement request has been transmitted, the provider returns the allocated autonomous vehicle 40 to the vehicle base and allocates another autonomous vehicle 40 to the place in which the user is located (Step S43). On the other hand, when a cancellation request has been transmitted, the provider does not allocate another autonomous vehicle 40 but returns the currently allocated autonomous vehicle 40 to the vehicle base (Step S42).

In the vehicle allocation service which is provided in this flow, by accepting cancel of a vehicle allocation request from a user who does not intend to use an autonomous vehicle 40 anymore, it is possible to increase a satisfaction level of the user for the vehicle allocation service. The process flow when it has been determined whether a state of an autonomous vehicle 40 is good before boarding the autonomous vehicle 40 is described herein, but the same process flow can be performed when it has been determined whether the state of the autonomous vehicle 40 is good after boarding the autonomous vehicle 40.

### Other embodiments

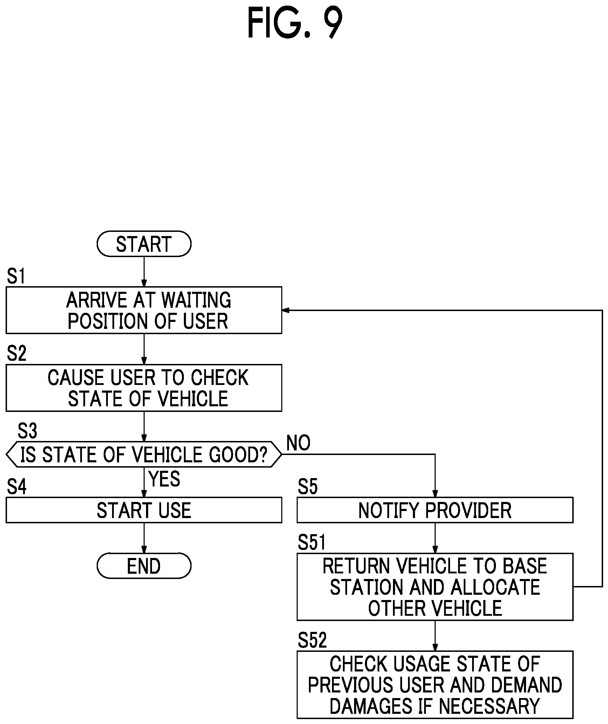

FIG. 9 is a flowchart illustrating a modified example of a flow of a vehicle allocation service which is provided by the vehicle allocation system according to the first embodiment. In the flowchart, operations or processes having the same details as in the flow of the vehicle allocation service illustrated in FIG. 2 are referred to by the same step numbers.

In the flow of the vehicle allocation service illustrated in the flowchart, when a user notifies a provider that the state of the arrived autonomous vehicle 40 is not good (Step S5), the provider returns the allocated autonomous vehicle 40 to the vehicle base and allocates another autonomous vehicle 40 to the place in which the user is located (Step S51). Then, the provider checks a usage state of a previous user of the autonomous vehicle 40 through inspection in the vehicle base. If necessary such as when a state of contamination or damage is malicious, the provider demands damages for the previous user (Step S52).

In the vehicle allocation service which is provided in this flow, by demanding damages for malicious use, it is possible to encourage each user to properly and respectfully use a vehicle.

The vehicle allocation systems according to the above-mentioned embodiments may be modified as follows.

For example, face authentication using a camera sensor may be used as the personal authentication method. Specifically, a face image of a user captured by a camera of a mobile terminal 30 is transmitted to the control center 10 at the time of admission to the vehicle allocation service and the face image is registered in the database of the vehicle allocation control server 20. Then, when the user uses the vehicle allocation service, the face image registered in the database is transmitted from the vehicle allocation control server 20 to an autonomous vehicle 40 as ID information of the user. The personal authentication unit 53 compares an image of a person near the autonomous vehicle 40 captured by a camera sensor of the autonomous vehicle 40 with the face image of the user acquired from the vehicle allocation control server 20, and authenticates the person imaged by the camera sensor as an identical person of a vehicle allocation request when both images match each other.

Authentication using near-field radio communication such as Felica (registered trademark) or NFC may be used as another person authentication method. In this case, a user carries a mobile terminal 30 or a dedicated IC card having a near-field radio communication function, and a communication device for near-field radio communication is attached to a position outside an autonomous vehicle 40 which can be approached by the user. The personal authentication unit 53 compares ID information directly acquired from the mobile terminal 30 or the IC card by near-field radio communication with ID information of the user acquired from the vehicle allocation control server 20, and authenticates the user of the mobile terminal 30 or the IC card as an identical person of a vehicle allocation request when both match each other. When the user carries an IC card for personal authentication, the IC card can also be used for boarding confirmation.

A method of detecting that a door of an autonomous vehicle 40 is locked from the inside using a sensor or a method of detecting that a seat belt is worn using a sensor may be used as a boarding confirmation method. Alternatively, a method of detecting presence or entry and exit of a person in a vehicle using an infrared sensor (a motion sensor) may be used as the boarding confirmation method. Alternatively, boarding confirmation may be performed by a user's operation of a human-machine interface (HMI) in a vehicle.

A vehicle allocation system (1) includes: an autonomous vehicle (40); a mobile terminal (30); and a control center (10) configured to communicate with the autonomous vehicle and the mobile terminal via a network (2), wherein the control center includes a vehicle allocation control unit (21) configured to receive a vehicle allocation request from the mobile terminal and to allocate the autonomous vehicle to a position which is designated in the vehicle allocation request, and a vehicle reallocation control unit (22) configured to allocate another autonomous vehicle when a vehicle replacement request has been received from the mobile terminal after the allocation has been completed.

## Claims

1. A vehicle allocation system (1) comprising:
at least two autonomous vehicles (40A, 40B);
a mobile terminal (30); and
a control center (10) configured to communicate with the at least two autonomous vehicles and the mobile terminal via a network (2),
wherein the control center (10) includes
a vehicle allocation control unit (21) configured to receive a vehicle allocation request from the mobile terminal and to allocate an autonomous vehicle (40A) among the at least two autonomous vehicles to a position which is designated in the vehicle allocation request, and
a vehicle reallocation control unit (22) configured to allocate another autonomous vehicle (40B) among the at least two autonomous vehicles to a current position of the currently allocated autonomous vehicle (40A) when a vehicle replacement request has been received from the mobile terminal after the allocation has been completed,
**characterized in that** the control center further includes:
a database configured to store an assessment value of each of a plurality of users; and
a user assessing unit (23) configured to increase or decrease the assessment value for a user depending on a usage state of an autonomous vehicle among the at least two autonomous vehicles for the user, and to determine a usage fee for each user depending on the assessment value.

2. The vehicle allocation system according to claim 1, wherein the mobile terminal (30) is configured to transmit the vehicle replacement request after an authentication process between the currently allocated autonomous vehicle and the mobile terminal has been completed.

3. The vehicle allocation system according to claim 2, wherein the mobile terminal (30) is configured to transmit the vehicle replacement request until the currently allocated autonomous vehicle arrives at a desired deboarding position set in the currently allocated autonomous vehicle.

4. The vehicle allocation system according to any one of claims 1 to 3, wherein the mobile terminal (30) is configured to add a reason why the mobile terminal has requested replacement of the currently allocated autonomous vehicle to the vehicle replacement request.

5. The vehicle allocation system according to claim 4, wherein the mobile terminal (30) is configured to add an evidence image captured by a camera of the mobile terminal to the vehicle replacement request.

6. The vehicle allocation system according to any one of claims 1 to 5, wherein the vehicle reallocation control unit (22) is configured to return the currently allocated autonomous vehicle to a base station when the vehicle replacement request has been received.

7. The vehicle allocation system according to any one of claims 1 to 6, wherein the mobile terminal (30) is configured to transmit an assessment of a state of the currently allocated autonomous vehicle to the control center, and
wherein the vehicle reallocation control unit (22) is configured to perform a process of reducing a usage fee of the currently allocated autonomous vehicle which is paid by a user when a negative assessment of the state of the currently allocated autonomous vehicle has been received from the mobile terminal.

8. The vehicle allocation system according to any one of claims 1 to 7, wherein the user assessing unit (23) is configured to decrease the assessment value of a previous user of the currently allocated autonomous vehicle (40A) when a reason why the vehicle replacement request is transmitted from the mobile terminal is a complaint about a usage state of the currently allocated autonomous vehicle.

9. The vehicle allocation system according to any one of claims 1 to 8, wherein the mobile terminal (30) is configured to transmit an assessment of the state of the currently allocated autonomous vehicle to the control center, and
wherein the user assessing unit (23) is configured to increase the assessment value of a previous user of the currently allocated autonomous vehicle (40A) when a positive assessment indicating that the usage state of the currently allocated autonomous vehicle is good has been received from the mobile terminal.

10. The vehicle allocation system according to any one of claims 1 to 9, wherein the mobile terminal (30) is configured to transmit a cancellation request for cancelling the vehicle allocation request to the control center, and
wherein the vehicle reallocation control unit (22) is configured to cancel the allocation of the currently allocated autonomous vehicle when the cancellation request has been received from the mobile terminal.

11. A vehicle allocation control server (20) configured to constitute a vehicle allocation system (1) along with at least two autonomous vehicles (40A, 40B) and a mobile terminal (30) and to communicate with the at least two autonomous vehicles and the mobile terminal via a network (2), the vehicle allocation control server comprising:
at least one processor; and
at least one memory in which at least one program is stored,
wherein the program is programmed to cause the processor to perform
receiving a vehicle allocation request from the mobile terminal,
allocating an autonomous vehicle (40A) among the at least two autonomous vehicles to a position which is designated in the vehicle allocation request, and
allocating another autonomous vehicle (40B) among the at least two autonomous vehicles to a current position of the currently allocated autonomous vehicle (40A) when a vehicle replacement request has been received from the mobile terminal after the allocation has been completed,
**characterized in that** the program is programmed to cause the processor to further perform:
registering an assessment value of each of a plurality of users in a database; and
increasing or decreasing the assessment value for a user depending on a usage state of an autonomous vehicle among the at least two autonomous vehicles for the user, and determining a usage fee for each user depending on the assessment value.

## Patentansprüche

1. Fahrzeugzuweisungssystem (1) mit:
zumindest zwei autonomen Fahrzeugen (40A, 40B);
einem mobilen Endgerät (30); und
einer Steuerzentrale (10), die konfiguriert ist zum Kommunizieren mit den zumindest zwei autonomen Fahrzeugen und dem mobilen Endgerät über ein Netzwerk (2),
wobei die Steuerzentrale (10) umfasst:
eine Fahrzeugzuweisungssteuereinheit (21), die konfiguriert ist zum Empfangen einer Fahrzeugzuweisungsanforderung von dem mobilen Endgerät und zum Zuweisen eines autonomen Fahrzeugs (40A) unter den zumindest zwei autonomen Fahrzeugen an eine Position, die in der Fahrzeugzuweisungsanforderung bezeichnet ist, und
eine Fahrzeugneuzuweisungssteuereinheit (22), die konfiguriert ist zum Zuweisen eines anderen autonomen Fahrzeugs (40B) unter den zumindest zwei autonomen Fahrzeugen an eine aktuelle Position des gerade zugewiesenen autonomen Fahrzeugs (40A), wenn eine Fahrzeugaustauschanforderung von dem mobilen Endgerät empfangen wurde, nachdem die Zuweisung abgeschlossen wurde,
**dadurch gekennzeichnet, dass** die Steuerzentrale zusätzlich umfasst:
eine Datenbank, die konfiguriert ist zum Speichern eines Bewertungswerts von jedem von einer Vielzahl von Benutzern; und
eine Benutzerbewertungseinheit (23), die konfiguriert ist zum Erhöhen oder Verringern des Bewertungswerts für einen Benutzer abhängig von einem Benutzungszustand eines autonomen Fahrzeugs unter den zumindest zwei autonomen Fahrzeugen für den Benutzer und zum Bestimmen einer Benutzungsgebühr für jeden Benutzer abhängig von dem Bewertungswert.

2. Fahrzeugzuweisungssystem gemäß Anspruch 1, wobei das mobile Endgerät (30) konfiguriert ist zum Senden der Fahrzeugaustauschanforderung, nachdem ein Authentisierungsprozess zischen dem gerade zugewiesenen autonomen Fahrzeug und dem mobilen Endgerät abgeschlossen wurde.

3. Fahrzeugzuweisungssystem gemäß Anspruch 2, wobei das mobile Endgerät (30) konfiguriert ist zum Senden der Fahrzeugaustauschanforderung, bis das gerade zugewiesene autonome Fahrzeug an einer gewünschten Aussteigeposition ankommt, die in dem gerade zugewiesenen autonomen Fahrzeug eingestellt ist.

4. Fahrzeugzuweisungssystem gemäß einem der Ansprüche 1 bis 3, wobei das mobile Endgerät (30) konfiguriert ist zum Hinzufügen eines Grunds, warum das mobile Endgerät Austausch des gerade zugewiesenen autonomen Fahrzeugs angefordert hat, zu der Fahrzeugaustauschanforderung.

5. Fahrzeugzuweisungssystem gemäß Anspruch 4, wobei das mobile Endgerät (30) konfiguriert ist zum Hinzufügen eines Beweisfotos, das durch eine Kamera des mobilen Endgeräts aufgenommen ist, zu der Fahrzeugaustauschanforderung .

6. Fahrzeugzuweisungssystem gemäß einem der Ansprüche 1 bis 5, wobei die Fahrzeugneuzuweisungssteuereinheit (22) konfiguriert ist zum Zurückbringen des gerade zugewiesenen autonomen Fahrzeugs an eine Basisstation, wenn die Fahrzeugaustauschanforderung empfangen wurde.

7. Fahrzeugzuweisungssystem gemäß einem der Ansprüche 1 bis 6, wobei das mobile Endgerät (30) konfiguriert ist zum Senden einer Bewertung eines Zustands des gerade zugewiesenen autonomen Fahrzeugs an die Steuerzentrale, und
wobei die Fahrzeugneuzuweisungssteuereinheit (22) konfiguriert ist zum Durchführen eines Prozesses zum Reduzieren einer Benutzungsgebühr des gerade zugewiesenen autonomen Fahrzeugs, die durch einen Benutzer bezahlt wird, wenn eine negative Bewertung des Zustands des gerade zugewiesenen Fahrzeugs von dem mobilen Endgerät empfangen wurde.

8. Fahrzeugzuweisungssystem gemäß einem der Ansprüche 1 bis 7, wobei die Benutzerbewertungseinheit (23) konfiguriert ist zum Verringern des Bewertungswerts eines vorherigen Benutzers des gerade zugewiesenen autonomen Fahrzeugs (40A), wenn ein Grund, warum die Fahrzeugaustauschanforderung von dem mobilen Endgerät gesendet wird, eine Beschwerde über einen Benutzungszustand des gerade zugewiesenen autonomen Fahrzeugs ist.

9. Fahrzeugzuweisungssystem gemäß einem der Ansprüche 1 bis 8, wobei das mobile Endgerät (30) konfiguriert ist zum Senden einer Bewertung des Zustands des gerade zugewiesenen autonomen Fahrzeugs an die Steuerzentrale, und
wobei die Benutzerbewertungseinheit (23) konfiguriert ist zum Erhöhen des Bewertungswerts eines vorherigen Benutzers des gerade zugewiesenen autonomen Fahrzeugs (40A), wenn eine positive Bewertung, die bezeichnet, dass der Benutzungszustand des gerade zugewiesenen autonomen Fahrzeugs gut ist, von dem mobilen Endgerät empfangen wurde.

10. Fahrzeugzuweisungssystem gemäß einem der Ansprüche 1 bis 9, wobei das mobile Endgerät (30) konfiguriert ist zum Senden einer Aufhebungsanforderung zum Aufheben der Fahrzeugzuweisungsanforderung an die Steuerzentrale, und
wobei die Fahrzeugneuzuweisungssteuereinheit (22) konfiguriert ist zum Aufheben der Zuweisung des gerade zugewiesenen autonomen Fahrzeugs, wenn die Aufhebungsanforderung von dem mobilen Endgerät empfangen wurde.

11. Fahrzeugzuweisungssteuerserver (20), der konfiguriert ist, zusammen mit zumindest zwei autonomen Fahrzeugen (40A, 40B) und einem mobilen Endgerät (30) ein Fahrzeugzuweisungssystem (1) zu bilden und mit den zumindest zwei autonomen Fahrzeugen und dem mobilen Endgerät über ein Netzwerk (2) zu kommunizieren, wobei der Fahrzeugzuweisungssteuerserver aufweist:
zumindest einen Prozessor; und
zumindest einen Speicher, in dem zumindest ein Programm gespeichert ist,
wobei das Programm programmiert ist zum Veranlassen des Prozessors zum Durchführen von:
Empfangen einer Fahrzeugzuweisungsanforderung von dem mobilen Endgerät,
Zuweisen eines autonomen Fahrzeugs (40A) unter den zumindest zwei autonomen Fahrzeugen an eine Position, die in der Fahrzeugzuweisungsanforderung bezeichnet ist, und
Zuweisen eines anderen autonomen Fahrzeugs (40B) unter den zumindest zwei autonomen Fahrzeugen an eine aktuelle Position des gerade zugewiesenen autonomen Fahrzeugs (40A), wenn eine Fahrzeugaustauschanforderung von dem mobilen Endgerät empfangen wurde, nachdem die Zuweisung abgeschlossen wurde,
**dadurch gekennzeichnet, dass** das Programm programmiert ist zum Veranlassen des Prozessors zum zusätzlichen Durchführen von:
Registrieren eines Bewertungswerts von jedem von einer Vielzahl von Benutzern in einer Datenbank; und
Erhöhen oder Verringern des Bewertungswerts für einen Benutzer abhängig von einem Benutzungszustand eines autonomen Fahrzeugs unter den zumindest zwei autonomen Fahrzeugen für den Benutzer und Bestimmen einer Benutzungsgebühr für jeden Benutzer abhängig von dem Bewertungswert.

## Revendications

1. Système d'allocation de véhicule (1) comprenant :
au moins deux véhicules autonomes (40A, 40B) ;
un terminal mobile (30) ; et
un centre de commande (10) configuré pour communiquer avec les au moins deux véhicules autonomes et le terminal mobile via un réseau (2),
dans lequel le centre de commande (10) inclut
une unité de commande d'allocation de véhicule (21) configurée pour recevoir une demande d'allocation de véhicule en provenance du terminal mobile et pour allouer un véhicule autonome (40A) parmi les au moins deux véhicules autonomes à une position qui est désignée dans la demande d'allocation de véhicule, et
une unité de commande de réallocation de véhicule (22) configurée pour allouer un autre véhicule autonome (40B) parmi les au moins deux véhicules autonomes à une position actuelle du véhicule autonome alloué actuellement (40A) lorsqu'une demande de remplacement de véhicule a été reçue en provenance du terminal mobile après que l'allocation a été achevée,
**caractérisé en ce que** le centre de commande inclut en outre :
une base de données configurée pour stocker une valeur d'évaluation de chacun d'une pluralité d'utilisateurs ; et
une unité d'évaluation d'utilisateur (23) configurée pour augmenter ou diminuer la valeur d'évaluation pour un utilisateur en fonction d'un état d'utilisation d'un véhicule autonome parmi les au moins deux véhicules autonomes pour l'utilisateur, et pour déterminer des frais d'utilisation pour chaque utilisateur en fonction de la valeur d'évaluation.

2. Système d'allocation de véhicule selon la revendication 1, dans lequel le terminal mobile (30) est configuré pour transmettre la demande de remplacement de véhicule après qu'un processus d'authentification entre le véhicule autonome alloué actuellement et le terminal mobile a été achevé.

3. Système d'allocation de véhicule selon la revendication 2, dans lequel le terminal mobile (30) est configuré pour transmettre la demande de remplacement de véhicule jusqu'à ce que le véhicule autonome alloué actuellement arrive à une position de débarquement souhaitée définie dans le véhicule autonome alloué actuellement.

4. Système d'allocation de véhicule selon l'une quelconque des revendications 1 à 3, dans lequel le terminal mobile (30) est configuré pour ajouter une raison pour laquelle le terminal mobile a demandé le remplacement du véhicule autonome alloué actuellement à la demande de remplacement de véhicule.

5. Système d'allocation de véhicule selon la revendication 4, dans lequel le terminal mobile (30) est configuré pour ajouter une image de preuve capturée par une caméra du terminal mobile à la demande de remplacement de véhicule.

6. Système d'allocation de véhicule selon l'une quelconque des revendications 1 à 5, dans lequel l'unité de commande de réallocation de véhicule (22) est configurée pour renvoyer le véhicule autonome alloué actuellement à une station de base lorsque la demande de remplacement de véhicule a été reçue.

7. Système d'allocation de véhicule selon l'une quelconque des revendications 1 à 6, dans lequel le terminal mobile (30) est configuré pour transmettre une évaluation d'un état du véhicule autonome alloué actuellement au centre de commande, et
dans lequel l'unité de commande de réallocation de véhicule (22) est configurée pour effectuer un processus de réduction de frais d'utilisation du véhicule autonome alloué actuellement qui sont payés par un utilisateur lorsqu'une évaluation négative de l'état du véhicule autonome alloué actuellement a été reçue en provenance du terminal mobile.

8. Système d'allocation de véhicule selon l'une quelconque des revendications 1 à 7, dans lequel l'unité d'évaluation d'utilisateur (23) est configurée pour diminuer la valeur d'évaluation d'un utilisateur précédent du véhicule autonome alloué actuellement (40A) lorsqu'une raison pour laquelle la demande de remplacement de véhicule est transmise depuis le terminal mobile est une plainte concernant un état d'utilisation du véhicule autonome alloué actuellement.

9. Système d'allocation de véhicule selon l'une quelconque des revendications 1 à 8, dans lequel le terminal mobile (30) est configuré pour transmettre une évaluation de l'état du véhicule autonome alloué actuellement au centre de commande, et
dans lequel l'unité d'évaluation d'utilisateur (23) est configurée pour augmenter la valeur d'évaluation d'un utilisateur précédent du véhicule autonome alloué actuellement (40A) lorsqu'une évaluation positive indiquant que l'état d'utilisation du véhicule autonome alloué actuellement est bon a été reçue en provenance du terminal mobile.

10. Système d'allocation de véhicule selon l'une quelconque des revendications 1 à 9, dans lequel le terminal mobile (30) est configuré pour transmettre une demande d'annulation pour annuler la demande d'allocation de véhicule au centre de commande, et
dans lequel l'unité de commande de réallocation de véhicule (22) est configurée pour annuler l'allocation du véhicule autonome alloué actuellement lorsque la demande d'annulation a été reçue en provenance du terminal mobile.

11. Serveur de commande d'allocation de véhicule (20) configuré pour constituer un système d'allocation de véhicule (1) avec au moins deux véhicules autonomes (40A, 40B) et un terminal mobile (30) et pour communiquer avec les au moins deux véhicules autonomes et le terminal mobile via un réseau (2), le serveur de commande d'allocation de véhicule comprenant :
au moins un processeur ; et
au moins une mémoire dans laquelle au moins un programme est stocké,
dans lequel le programme est programmé pour amener le processeur à effectuer
la réception d'une demande d'allocation de véhicule en provenance du terminal mobile,
l'allocation d'un véhicule autonome (40A) parmi les au moins deux véhicules autonomes à une position qui est désignée dans la demande d'allocation de véhicule, et
l'allocation d'un autre véhicule autonome (40B) parmi les au moins deux véhicules autonomes à une position actuelle du véhicule autonome alloué actuellement (40A) lorsqu'une demande de remplacement de véhicule a été reçue en provenance du terminal mobile après que l'allocation a été achevée,
**caractérisé en ce que** le programme est programmé pour amener le processeur à effectuer en outre :
l'enregistrement d'une valeur d'évaluation de chacun d'une pluralité d'utilisateurs dans une base de données ; et
l'augmentation ou la diminution de la valeur d'évaluation pour un utilisateur en fonction d'un état d'utilisation d'un véhicule autonome parmi les au moins deux véhicules autonomes pour l'utilisateur, et la détermination de frais d'utilisation pour chaque utilisateur en fonction de la valeur d'évaluation.
